# EUROPÄISCHE PATENTANMELDUNG

(11) **EP 1 829 750 A1**
(43) Veröffentlichungstag der Anmeldung: **05.09.2007**
(21) Anmeldenummer: 06004413.8
(22) Anmeldetag: 03.03.2006
(51) Int. Cl.: B60R 16/02

(54) **Vorrichtung und Verfahren zum Laden einer Zusatzbatterie eines Fahrzeugs**

(71) Anmelder: IMK AUTOMOTIVE GMBH, 09111 Chemnitz (DE)
(72) Erfinder: Leidholdt, Wolfgang, 08294 Lößnitz (DE)
(74) Vertreter: Grünecker, Kinkeldey, Stockmair & Schwanhäusser Anwaltssozietät

(57) **Zusammenfassung**

Die vorliegende Erfindung betrifft eine Vorrichtung und ein Verfahren zum Laden einer von einem Bordnetz eines Fahrzeugs gespeisten Zusatzbatterie des Fahrzeugs. Es ist die Aufgabe der Erfindung, eine Stromversorgung für Ruhestromverbraucher eines Fahrzeugs zur Verfügung zu stellen, welche auch bei hoher Strombelastung und nur kurzer Zeit für Batterieaufladung eine stabile Stromversorgung gewährleistet. Diese Aufgabe wird durch eine Vorrichtung der oben genannten Gattung gelöst, die eine der Zusatzbatterie vorgeschaltete Ladewandlereinheit aufweist, welche eine Ladekontrolleinheit für die Zusatzbatterie und eine mit der Ladekontrolleinheit zumindest mittelbar gekoppelte Stromwandlereinheit für einen Eingangsstrom des Bordnetzes aufweist. Die Aufgabe wird ferner durch ein Verfahren der oben genannten Gattung gelöst, bei welchem ein Ladezustand der Zusatzbatterie mit einer Ladekontrolleinheit für die Zusatzbatterie ermittelt wird und in Abhängigkeit von dem ermittelten Ladezustand ein Eingangsstrom des Bordnetzes mit einer Stromwandlereinheit in einen definierten Ladestrom für die Zusatzbatterie umgewandelt wird.

## Beschreibung

Die vorliegende Erfindung betrifft eine Vorrichtung sowie ein Verfahren zum Laden einer von einem Bordnetz eines Fahrzeugs gespeisten Zusatzbatterie des Fahrzeugs.

Fahrzeuge besitzen typischerweise eine Energieversorgungsvorrichtung mit einem Generator zur Erzeugung elektrischer Energie, einem Stromkreis mit einer Bordnetz- bzw. Starterbatterie und verschiedenen Bordnetzverbrauchern. Neben den im Motorbetrieb aktiven Bordnetzverbraucherelementen weisen heutige Fahrzeuge eine Anzahl so genannter Ruhestromverbraucher auf. Solche Ruhestromverbraucher sind beispielsweise ein Empfänger einer Zentralverriegelung des Fahrzeugs, ein Bordrechner, ein Radio, eine Uhr und/oder ein im Fahrzeug integrierter Marderschutz. Da solche Ruhestromverbraucher immer vielfältiger und leistungsstärker werden, ist in heutigen Personenkraftwagen eine Zunahme des Ruhestromverbrauchs zu verzeichnen, wodurch die Bordnetzbatterie stark belastet wird.

Besonders stark wird die Bordnetzbatterie durch größere Verbraucher wie beispielsweise eine Standheizung belastet, welche zur Vorheizung eines Fahrzeugs im Stand, insbesondere bei kalter Witterung, verwendet wird. Gerade wenn das Fahrzeug nur zu Kurzstreckenfahrten eingesetzt wird, reichen diese nicht aus, um die von dem großen Verbraucher belastete Starterbatterie wieder voll aufzuladen.

Um sowohl das Fahrzeug selbst als auch die Ruhestromverbraucher mit der erforderlichen Energie versorgen zu können, wird in vielen der derzeit eingesetzten Fahrzeuge bei einem Einbau von Standheizungen eine Starterbatterie mit großer Kapazität vorgesehen. Der Ladezustand solcher Starterbatterien befindet sich, auch bei einer Belastung durch größere Ruhestromverbraucher, im Mittel des Kapazitätsbereiches und nicht an der untersten Grenze. Auf diese Weise kann der im folgenden beschriebene Effekt der Aussulfatierung bei solchen Batterien verringert werden. Um derartige Starterbatterien nach jeder Belastung durch einen großen Ruhestromverbraucher wieder voll aufzuladen, sind jeweils längere Fahrten des Fahrzeugs oder ein Aufladen im Stand mit einem Netzladegerät notwendig.

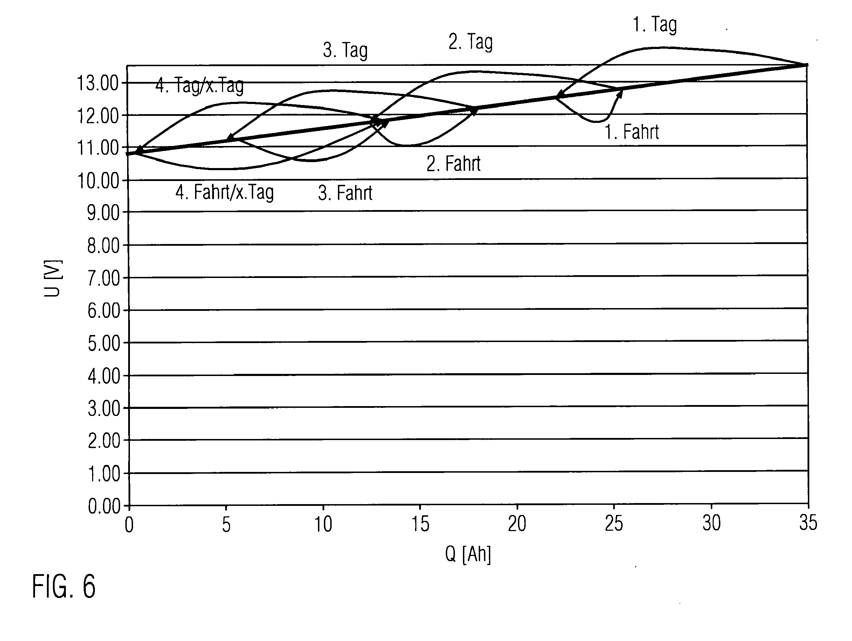

Der Effekt der stetigen Endladung der Starterbatterie wird anhand des in Figur 6 gezeigten Beispiels verdeutlicht. Figur 6 zeigt schematisch eine Spannung U einer Starterbatterie über der Ladung Q der Starterbatterie. Wie rechts oben in der Darstellung angedeutet ist, weist die Starterbatterie anfangs eine hohe Ladung auf, welche bei Anschluss eines großen Ruhestromverbrauchers, beispielsweise zum Erwärmen des Fahrzeugs, stark absinkt. Während einer ersten Fahrt des Fahrzeugs kann die Ladung der Starterbatterie nur geringfügig erhöht werden, der ursprüngliche Ladezustand wird jedenfalls bei einer kurzen Fahrt nicht wieder hergestellt. Am zweiten Tag, an welchem wieder der Ruhestromverbraucher von der Starterbatterie gespeist wird, wird die Starterbatterie noch stärker entladen als am ersten Tag. Obwohl während einer Kurzfahrt am zweiten Tag die Starterbatterie mit größerer Ladung als bei dem Aufladevorgang am ersten Tag versorgt werden kann, ist im Ergebnis auch nach der Kurzfahrt die Ladung der Starterbatterie geringer als am ersten Tag des Batteriebetriebs.

Diese stückweise Entladung der Starterbatterie führt Tag für Tag dazu, dass diese immer mehr entladen wird, bis sich etwa ein Gleichgewicht zwischen Entladung und Ladung bei einem sehr niedrigen Ladezustand der Starterbatterie einstellt. Ein niedriger Ladezustand der Starterbatterie hat jedoch eine Aussulfatierung der Starterbatterie zur Folge. Diese Sulfatierung bewirkt, dass sich PbSO₄-Kristalle zu immer größeren Verbünden zusammenschließen. So verringert sich die Oberfläche des PbSO₄. Je kleiner die Oberfläche desto kleiner ist die der Starterbatterie entnehmbare Ladung, da jedes reagierende Schwefelsäuremolekül zwei Elektronen zum Stromfluss beisteuert. Um eine lange Lebensdauer eines Bleissammlers der Starterbatterie zu ermöglichen, muss daher der Ladezustand der Starterbatterie immer nahe der Vollkapazität und nicht, wie im Beispiel von Figur 6 gezeigt, nahe der Entladung sein.

Ein anderer Lösungsansatz für die oben genannten Probleme sieht einen Einbau einer zweiten, schwereren Starterbatterie vor. Hiermit kann sichergestellt werden, dass ein Starten des Motors des Fahrzeugs, auch bei Belastung durch einen großen Ruhestromverbraucher, nahezu immer möglich ist. Der oben beschriebene Effekt der Aussulfatierung wirkt sich bei dieser Lösungsvariante gänzlich in der Zweitbatterie aus, welche als eine Opferbatterie wirkt. Diesem Effekt könnte prinzipiell begegnet werden, indem beispielsweise ein NiCd-Sammler als Zweitbatterie eingesetzt werden würde, was jedoch zu kostenintensiv ist.

Es ist daher die Aufgabe der vorliegenden Erfindung, eine Vorrichtung zum Läden einer von einem Bordnetz eines Fahrzeugs gespeisten Zusatzbatterie des Fahrzeugs sowie ein zugehöriges Ladeverfahren zur Verfügung zu stellen, mit welchem auf kostengünstige Weise eine langzeitstabile Stromversorgung des Fahrzeugs, auch bei Einsatz größerer Ruhestromverbraucher, gewährleistet werden kann.

Diese Aufgabe wird erfindungsgemäß durch eine Vorrichtung der oben genannten Gattung gelöst, welche eine der Zusatzbatterie vorgeschaltete Ladewandlereinheit aufweist, welche eine Ladekontrolleinheit für die Zusatzbatterie und eine mit der Ladekontrolleinheit zumindest mittelbar gekoppelte Stromwandlereinheit für einen Eingangsstrom des Bordnetzes aufweist.

Die Erfindung hat den Vorteil, dass mit Hilfe der Ladewandlereinheit der Eingangsstrom des Bordnetzes in Abhängigkeit von dem jeweils festgestellten Ladezustand der Zusatzbatterie in einen definierten Ladestrom für die Zusatzbatterie umgewandelt werden kann, so dass die Zusatzbatterie schnell wieder aufgeladen werden kann. Auf diese Weise kann der Effekt der Aussulfatierung bei der Zusatzbatterie stark verringert werden. In Folge dessen kann bei der erfindungsgemäßen Vorrichtung eine kleine, leichte, kostengünstige Zweitbatterie als Zusatzbatterie eingesetzt werden und dennoch eine hohe Langzeitstabilität für die Stromversorgung des Fahrzeugs, einschließlich der Ruhestromverbraucher, zur Verfügung gestellt werden. Mit der erfindungsgemäßen Vorrichtung ist es möglich, sowohl die Haupt- bzw. Starterbatterie des Fahrzeugs als auch die Zusatzbatterie selbst bei Kurzstreckenfahrten voll zu laden.

Entsprechend einer vorteilhaften Ausführungsform der Erfindung weist die Stromwandlereinheit einen Abwärtswandler und einen Aufwärtswandler auf. Der Abwärtswandler stellt im Fall einer tief entladenen Zusatzbatterie, in welchem eine Ladespannung der Zusatzbatterie geringer als eine Bordnetzspannung ist, einen definierten hohen Ladestrom für die Zusatzbatterie zur Verfügung. Der Aufwärtswandler stellt im Fall eines regulären Laderegimes, in welchem die Zusatzbatterie teilgeladen ist, aber für einen hohen erwünschten Ladestrom eine höhere Ladespannung benötigt, einen definierten Ladestrom bereit, wobei der Eingangsstrom höher als der Ladestrom ist. Durch den jeweils mit hohem Wirkungsgrad arbeitenden Abwärtswandler bzw. Aufwärtswandler kann somit ein geeigneter Ladestrom für die Zusatzbatterie effizient zur Verfügung gestellt werden, um diese möglichst schnell aufzuladen.

Gemäß einer Variante der Erfindung ist zwischen der Ladekontrolleinheit und der Stromwandlereinheit eine Signalverarbeitungs- und Steuereinheit vorgesehen. Die Signalverarbeitungs- und Steuereinheit kann einen durch die Ladekontrolleinheit festgestellten Ladezustand der Zusatzbatterie erfassen und so verarbeiten, dass ein geeignetes Laderegime für die Zusatzbatterie erstellt wird, nach welchem die Stromwandlereinheit arbeitet und die Zusatzbatterie so mit Strom versorgt, dass diese sehr schnell aufladbar ist.

Nach einem Beispiel der Erfindung ist die Signalverarbeitungs- und Steuereinheit mit einer Zustandsanzeige gekoppelt. Über die Zustandanzeige können einem interessierten Nutzer charakteristische Vorgänge in der Ladewandlereinheit angezeigt werden. Dies kann beispielsweise in einer Prototypenphase der Vorrichtung von Wichtigkeit sein, um die Ladewandlereinheit überprüfen und verbessern zu können. Insbesondere kann durch die Zustandsanzeige ein jeweiliger Ladezustand der Zusatzbatterie angezeigt werden. Es ist jedoch auch möglich, andere Zustände, wie einen Abwärtswandler- oder Aufwärtswandlerbetrieb anzuzeigen. Auf diese Weise kann ein Nutzer der erfindungsgemäßen Vorrichtung einen guten Überblick über den Zustand der Stromversorgung seines Fahrzeugs gewinnen.

Entsprechend einer vorteilhaften Weiterbildung der Erfindung ist die Signalverarbeitungs- und Steuereinheit mit einem von einem Bediener betätigbaren Zustandsschalter gekoppelt. Mit dem Zustandsschalter ist es möglich, bewusst die Stromversorgung des Fahrzeugs mit der Zusatzbatterie zu beeinflussen. Beispielsweise kann eine Stromversorgung aus der Zusatzbatterie mit dem Zustandsschalter unterbunden werden oder ein Laden der Zusatzbatterie kann unterbrochen oder verhindert werden.

Es hat sich zudem als vorteilhaft erwiesen, wenn die Vorrichtung eine mit einem Zündschalter des Fahrzeugs gekoppelte Fahrzeugzustandsidentifikationseinheit aufweist. Durch das Vorsehen der Fahrzeugzustandsidentifikationseinheit kann beispielsweise festgestellt werden, ob der Motor läuft und das Bordnetz stabil mit Hilfe der Lichtmaschine mit Strom versorgt wird.

Vorzugsweise ist die Fahrzeugzustandsidentifikationseinheit mit der Signalverarbeitungs- und Steuereinheit gekoppelt. Somit kann dann, wenn der Motor des Fahrzeugs läuft, die Signalverarbeitungs- und Steuereinheit ein Signal an die Ladewandlereinheit zum Laden der Zusatzbatterie zur Verfügung stellen.

Entsprechend einer besonderen Ausführungsform der Erfindung weist die Ladevorrichtung einen Umschalter auf, mit welchem Ruhestromverbraucher des Fahrzeugs auf die Ruhebatterie oder auf das Bordnetz des Fahrzeugs umschaltbar sind. Hiermit können während des Ladens der Zusatzbatterie die Ruhestromverbraucher des Fahrzeugs auf das Bordnetz umgeschaltet werden, wohingegen bei einem Stillstand des Fahrzeugs die Ruhestromverbraucher des Fahrzeugs von der Zusatzbatterie speisbar sind.

Es ist ganz besonders von Vorteil, wenn der Stromwandlereinheit eine Eingangsabsicherungseinheit vorgeschaltet ist. Durch den Einsatz der Eingangsabsicherungseinheit kann in einem Versagensfall von Funktionseinheiten der Ladevorrichtung das Bordnetz des Fahrzeugs geschützt werden.

Entsprechend einer weiteren Variante der Erfindung weist die Vorrichtung eine Batterieabsicherung für die Zusatzbatterie auf. Die Batterieabsicherung kann die Zusatzbatterie gegen ein Versagen der Ladewandlereinheit absichern.

Entsprechend einem weiteren Beispiel der Erfindung weist die Ladewandlereinheit eine Ausgangsabsicherungseinheit auf. Mit Hilfe der Ausgangsabsicherungseinheit kann die Ladewandlereinheit gegenüber einem Überstrom bei einem Versagen eines Ruhestromverbrauchers abgesichert werden.

Die Aufgabe wird ferner durch ein Verfahren zum Laden einer von einem Bordnetz eines Fahrzeugs gespeisten Zusatzbatterie des Fahrzeugs gelöst, bei welchem ein Ladezustand der Zusatzbatterie mit einer Ladekontrolleinheit für die Zusatzbatterie ermittelt wird und in Abhängigkeit von dem ermittelten Ladezustand ein Eingangsstrom des Bordnetzes mit einer Stromwandlereinheit in einen definierten Ladestrom für die Zusatzbatterie umgewandelt wird.

Mit Hilfe des erfindungsgemäßen Verfahrens kann eine Zusatzbatterie, welche hohen Belastungen durch Ruhestromverbrauchern unterliegt, selbst bei einer kurzen Fahrzeit des Fahrzeugs wieder aufgeladen werden. Damit kann auch eine kleine, leichte und kostengünstige Zusatzbatterie zur Stromversorgung von Ruhestromverbrauchern in einem Fahrzeug verwendet werden und dennoch langzeitstabil die Stromversorgung dieser Ruhestromverbraucher gewährleistet werden.

Gemäß einer günstigen Variante der Erfindung erstellt eine Signalverarbeitungs- und Steuereinheit in Abhängigkeit von dem ermittelten Ladezustand der Zusatzbatterie ein Laderegime für die Zusatzbatterie. Mit Hilfe des Laderegimes kann der jeweilige Ladestrom für die Zusatzbatterie so eingestellt werden, dass auf möglichst schnelle und effektive Weise die Zusatzbatterie wieder aufgeladen wird.

Entsprechend einem Beispiel der Erfindung wird die Zusatzbatterie, wenn sie stark entladen ist, zunächst mit einem geringen, allmählich ansteigenden Ladestrom gespeist und ab Erreichen eines bestimmten Ladezustandes mit einem konstanten Ladestrom versorgt. Mit diesem Laderegime kann die Zusatzbatterie zunächst mit dem geringen, allmählich ansteigenden Strom effektiv aus einem Bereich der Tiefentladung herausgebracht werden, wonach die Zusatzbatterie ab Erreichen des bestimmten Ladezustandes kontinuierlich mit gleichem Strom aufgeladen werden kann. Diese Vorgehensweise ermöglicht es, einen in der Zusatzbatterie verwendeten Elektrolyten, welcher im Bereich der Tiefentladung der Zusatzbatterie stark an Leitfähigkeit verliert und damit den Innenwiderstand der Batterie heraufsetzt, allmählich zu reaktivieren, bis er eine ausreichende Leitfähigkeit besitzt und der Innenwiderstand der Zusatzbatterie gering genug ist, um die Zusatzbatterie effizient aufladen zu können.

Es hat sich hierbei als vorteilhaft erwiesen, wenn das Laderegime in Abhängigkeit von einer Außentemperatur oder einer Batterietemperatur erstellt wird. Somit kann der Ladestrom für die Zusatzbatterie sowohl in Abhängigkeit von einem jeweiligen Ladezustand der Zusatzbatterie als auch in Abhängigkeit von der Außen- bzw. Batterie-temperatur eingestellt werden, wodurch die Zusatzbatterie besonders wirksam geladen werden kann.

Entsprechend einer Weiterbildung der Erfindung wird der Ladezustand der Zusatzbatterie angezeigt. Dies gibt einem Nutzer des Fahrzeugs einen Überblick über den jeweiligen Ladezustand der Zusatzbatterie, so dass er, wenn nötig, geeignete Maßnahmen zur Wartung oder zum Austausch der Ladevorrichtung und/oder der Zusatzbatterie treffen kann.

Entsprechend einem weiteren Beispiel der Erfindung kann eine Ladestromversorgung der Zusatzbatterie mit einem Zustandsschalter beeinflusst werden. Es ist damit möglich, das Laden der Zusatzbatterie zu unterbrechen oder zu verhindern bzw. wieder aufzunehmen. Auf diese Weise kann die Stromversorgung an dem Fahrzeug bewusst durch einen Nutzer beeinflusst werden.

Es hat sich als sinnvoll erwiesen, wenn ein Zustand des Fahrzeugs mit einer Fahrzeugszustandidentifikationseinheit ermittelt wird und an die Signalverarbeitungs- und Steuereinheit übermittelt wird. Auf diese Weise erhält die Signalverarbeitungs- und Steuereinheit ein Signal, das ihr anzeigt, ob der Motor des Fahrzeugs läuft bzw. das Bordnetz stabil aus der Lichtmaschine des Fahrzeugs mit Strom versorgt wird. In Abhängigkeit davon kann die Signalverarbeitungs- und Steuereinheit festlegen, wann die Zusatzbatterie zu laden ist bzw. nicht zu laden ist.

Gemäß einer weiteren Ausführungsform der Erfindung werden Ruhestromverbraucher des Fahrzeugs mit einem Umschalter auf die Zusatzbatterie oder auf das Bordnetz des Fahrzeugs umgeschaltet. Durch Betätigen des Umschalters kann entschieden werden, ob die Ruhestromverbraucher durch die Zusatzbatterie oder durch das Bordnetz des Fahrzeugs mit Strom versorgt werden sollen. Diese Variante lässt auch dann eine Stromversorgung der Ruhestromverbraucher durch das Bordnetz des Fahrzeugs zu, wenn diese bei Stillstand des Fahrzeugs typischerweise durch die Zusatzbatterie gespeist werden würden. Umgekehrt können Ruhestromverbraucher, welche typischerweise durch das Bordnetz des Fahrzeugs mit Strom versorgt werden, durch den Umschalter mit der Zusatzbatterie verbunden werden, um mit Strom versorgt zu werden.

Vorteilhafte Ausführungsformen werden im Folgenden anhand der Figuren der Zeichnung erläutert, wobei
- Figur 1: eine schematische Darstellung einer Vorrichtung zum Laden einer Zusatzbatterie gemäß einer Ausführungsform der vorliegenden Erfindung ist;
- Figur 2: eine schematische Prinzipdarstellung einer Ladewandlereinheit gemäß einer Ausführungsform der vorliegenden Erfindung ist;
- Figur 3: eine schematische Darstellung eines Verhältnisses zwischen einem Innenwiderstand und einem Ladezustand einer gemäß der vorliegenden Erfindung verwendeten Zusatzbatterie ist;
- Figur 4: eine schematische Darstellung eines Verhältnisses zwischen einer Spannung und einem Ladezustand einer gemäß der vorliegenden Erfindung verwendeten Zusatzbatterie ist;
- Figur 5: eine schematische Darstellung möglicher Laderegime für die Zusatzbatterie der vorliegenden Erfindung ist; und
- Figur 6: schematisch Entlade- und Ladezyklen an einer Zusatzbatterie gemäß dem Stand der Technik zeigt.

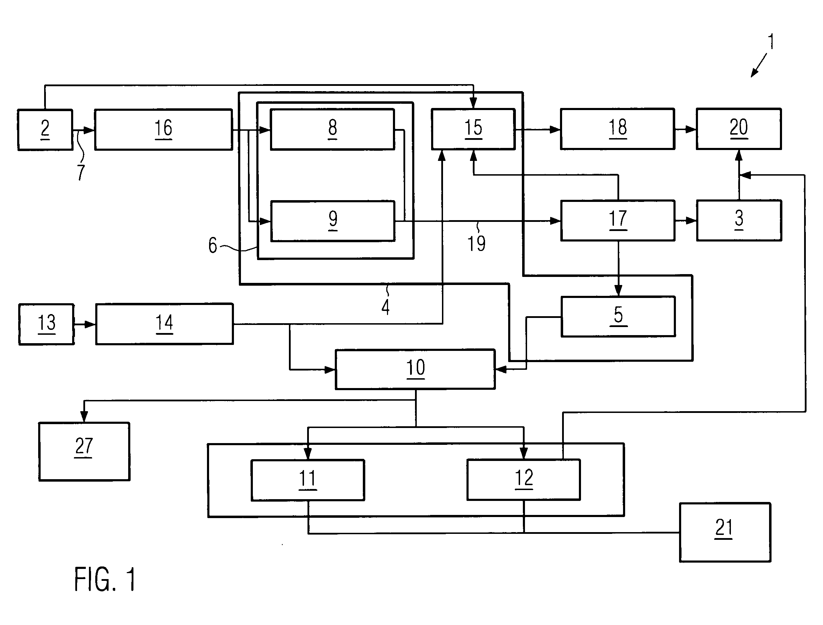

Figur 1 zeigt schematisch eine Ausführungsform einer Vorrichtung 1 zum Laden einer von einem Bordnetz 2 eines Fahrzeugs gespeisten Zusatzbatterie 3 des Fahrzeugs anhand einer Ausführungsform der Erfindung.

Die gemäß der vorliegenden Erfindung verwendete Zusatzbatterie 3 ist kleiner als herkömmlich verwendete Zusatzbatterien. Zudem ist die Zusatzbatterie 3 schnellladefähig und preisgünstig. Beispielsweise kann als Zusatzbatterie 3 eine Bleibatterie verwendet werden.

Das Bordnetz 2 stellt einen Eingangsstrom 7 für die Vorrichtung 1 zur Verfügung. Die Vorrichtung 1 weist eine Eingangsabsicherung 16 auf, welche sämtlichen anderen Bauteilen der Vorrichtung 1 vorgeschaltet ist. Die Eingangsabsicherungseinheit 16 ist in dem gezeigten Beispiel eine Kraftfahrzeugflachsicherung, kann aber in anderen nicht gezeigten Beispielen der Erfindung auch eine andere Sicherung sein. Der durch das Bordnetz 2 zur Verfügung gestellte Eingangsstrom 7 fließt zunächst über die Eingangsabsicherungseinheit 16, welche dazu dient, bei einem Versagen einer anderen Funktionseinheit der Vorrichtung 1 das Bordnetz 2 zu schützen.

Die Eingangsabsicherungseinheit 16 ist mit einer Ladewandlereinheit 4 gekoppelt. Die Ladewandlereinheit 4 weist eine Stromwandlereinheit 6 für den Eingangsstrom 7 des Bordnetzes 2 und eine Ladekontrolleinheit 5 für die Zusatzbatterie 3 auf.

Die Stromwandlereinheit 6 weist einen Abwärtswandler 8 und einen Aufwärtswandler 9 auf. Der Abwärtswandler 8 ist parallel zu dem Aufwärtswandler 9 geschaltet. Auf diese Weise kann der durch das Bordnetz 2 zur Verfügung gestellte Eingangsstrom 7 entweder von dem Abwärtswandler 8 oder von dem Aufwärtswandler 9 in einen definierten Ladestrom 19 für die Zusatzbatterie 3 umgewandelt werden.

Der Abwärtswandler 8 wandelt im Fall einer tief entladenen Zusatzbatterie 3, in welchem eine Ladespannung U_{Z} der Zusatzbatterie 3 geringer als eine Bordnetzspannung U_{B} ist, den Eingangsstrom 7 in einen Ladestrom 19 für die Zusatzbatterie 3 um, welcher höher als der Eingangsstrom 7 ist.

Der Aufwärtswandler 9 wandelt im Fall eines regulären Laderegimes, in welchem die Zusatzbatterie 3 teilgeladen ist, aber für den erwünschten hohen Ladezustand eine höhere Ladespannung U_{Z} benötigt, den Eingangsstrom 7 in einen Ladestrom 19 um, der niedriger als der Eingangsstrom 7 ist.

Der Abwärtswandler 8 und der Aufwärtswandler 9 arbeiten mit hohem Wirkungsgrad und stellen jeweils einen definierten Ladestrom 19 für die Zusatzbatterie 3 zur Verfügung.

Die Stromwandlereinheit 6 wird durch eine Signalverarbeitungs- und Steuereinheit 10 gesteuert. Die Signalverarbeitungs- und Steuereinheit 10 übermittelt an die Stromwandlereinheit 6 eine Information von der Ladekontrolleinheit 5 über den jeweiligen Ladezustand der Zusatzbatterie 3.

In anderen, nicht gezeigten Ausführungsformen der Erfindung kann die Ladekontrolleinheit 5 auch direkt mit der Stromwandlereinheit, ohne eine zwischengeschaltete Signalverarbeitungs- und Steuereinheit 10, vorgesehen sein.

Die Ladekontrolleinheit 5 umfasst eine Spannungsüberwachung für die Zusatzbatterie 3, über welche festgestellt wird, in welchem Ladezustand die Zusatzbatterie 3 ist. Ist die Zusatzbatterie 3 voll geladen, entspricht dies einem Ladezustand von etwa 100 %. Ist die Zusatzbatterie 3 in einem tief entladenem Zustand, so entspricht dies einem Ladezustand von etwa 10 % oder weniger.

Der von der Stromwandlereinheit 6 bereitgestellte Ladestrom 19 fließt über eine Batterieabsicherungseinheit 17, bevor er der Zusatzbatterie 3 zur Verfügung gestellt wird. Die Batterieabsicherungseinheit 17 ist in dem gezeigten Beispiel eine Kraftfahrzeugflachsicherung, kann jedoch in anderen, nicht gezeigten Beispielen der Erfindung eine andere geeignete Sicherung sein. Die Batterieabsicherungseinheit 17 sichert die Zusatzbatterie 3 gegenüber einem eventuellen Versagen der die Stromwandlereinheit 6 und die Ladekontrolleinheit 5 umfassenden Ladewandlereinheit 4 ab.

Die Signalverarbeitungs- und Steuereinheit 10 erhält von einer Fahrzeugzustandsidentifikationseinheit 14 ein Signal, dass der Signalverarbeitungs- und Steuereinheit 10 angibt, ob der Motor des Fahrzeugs läuft bzw. ob das Bordnetz 2 stabil aus der Lichtmaschine des Fahrzeugs mit Strom versorgt wird. Die Zustandsidentifikationseinheit 14 ist mit einer Zündung bzw. einem Zündschalter 13 des Fahrzeugs gekoppelt und umfasst eine Eingangsspannungsüberwachung zur Zustandsidentifikation des Fahrzeugs.

In Abhängigkeit von dem durch die Zustandsidentifikationseinheit 14 ermittelten Zustand des Fahrzeugs erkennt die Signalverarbeitungs- und Steuereinheit 10, ob die Zusatzbatterie 3 zu laden oder nicht zu laden ist. Fährt das Fahrzeug, kann die Zusatzbatterie 3 geladen werden. Läuft der Motor des Fahrzeugs nicht, ist die Zusatzbatterie 3 nicht zu laden.

Das Bordnetz 2 und die Signalverarbeitungs- und Steuereinheit 10 sowie die Batterieabsicherungseinheit 17 sind mit einem Umschalter 15 gekoppelt. Mit Hilfe des Umschalters 15 können Ruhestromverbraucher 20 des Fahrzeugs auf die Zusatzbatterie 3 oder auf das Bordnetz 2 umgeschaltet werden.

Ein Ausgang des Umschalters 15 ist mit einer Ausgangsabsicherungseinheit 18 gekoppelt. Die Ausgangsabsicherungseinheit 18 ist wiederum mit einem oder mehreren Ruhestromverbrauchern 20 gekoppelt. Die Ausgangsabsicherungseinheit 18 sichert die Schaltung der Ladewandlereinheit 4 gegenüber einem Überstrom bei einem Versagen eines Ruhestromverbrauchers 20 ab. Die Ausgangsabsicherungseinheit 18 ist in dem gezeigten Beispiel eine Kraftfahrzeugflachsicherung, kann jedoch in anderen, nicht gezeigten Beispielen der Erfindung auch eine andere Sicherung sein. Sie kann beispielsweise durch die übliche Absicherung der Fahrzeugstromkreise ersetzt werden.

Die Signalverarbeitungs- und Steuereinheit 10 ist mit einem Cockpit 21 des Fahrzeugs gekoppelt. An dem Cockpit 21 ist eine Zustandanzeige 11 für die Zusatzbatterie 3 und ein Zustandsschalter 12 für die Zusatzbatterie 3 vorgesehen. Die Zustandsanzeige 11 und der Zustandsschalter 12 sind optionale Bausteine gemäß der in Figur 1 gezeigten Ausführungsform der Erfindung und müssen in anderen Ausführungsformen der Erfindung nicht vorhanden sein. Die Signalverarbeitungs- und Steuereinheit 10 kann auch mit weiteren Funktionseinheiten 27 der Vorrichtung 1 gekoppelt sein, um diese intelligent zu überwachen oder zu beeinflussen.

Die Zustandsanzeige 11 zeigt in dem in Figur 1 gezeigten Beispiel einem interessierten Nutzer, insbesondere in einer Prototypenphase, an, welche Vorgänge in der Vorrichtung 1 gerade ablaufen. Beispielsweise enthält die Zustandsanzeige 11 eine Information über den Ladezustand der Zusatzbatterie 3. Auf Grundlage der Anzeige des aktuellen Ladezustands der Zusatzbatterie 3 kann auf eine Betriebszeit und eine Betriebssicherheit der Ruhestromverbraucher 20 geschlossen werden. Die Zustandsanzeige 11 kann beispielsweise auch anzeigen, ob der Abwärtswandler 8 oder der Aufwärtswandler 9 in Betrieb ist. Die Zustandsanzeige 11 weist für die Anzeige der jeweiligen Information Leuchtdioden und/oder ein Display auf, das vorzugsweise von dem Nutzer des Fahrzeugs am Cockpit 21 einsehbar ist.

Der Zustandsschalter 12 ist ein Schalter, mit welchem eine Ladung der Zusatzbatterie 3 durch das Bordnetz 2 des Fahrzeugs unterbrochen oder verhindert werden kann. Mit Hilfe des Zustandsschalters 12 ist es auch möglich, die Stromversorgung der Ruhestromverbraucher 20 durch die Zusatzbatterie 3 zu unterbrechen oder zu unterbinden bzw. wieder herzustellen. Damit lässt der Zustandsschalter 12 eine bewusste Beeinflussung des Betriebsregimes der Vorrichtung 1 durch den Nutzer des Fahrzeugs zu.

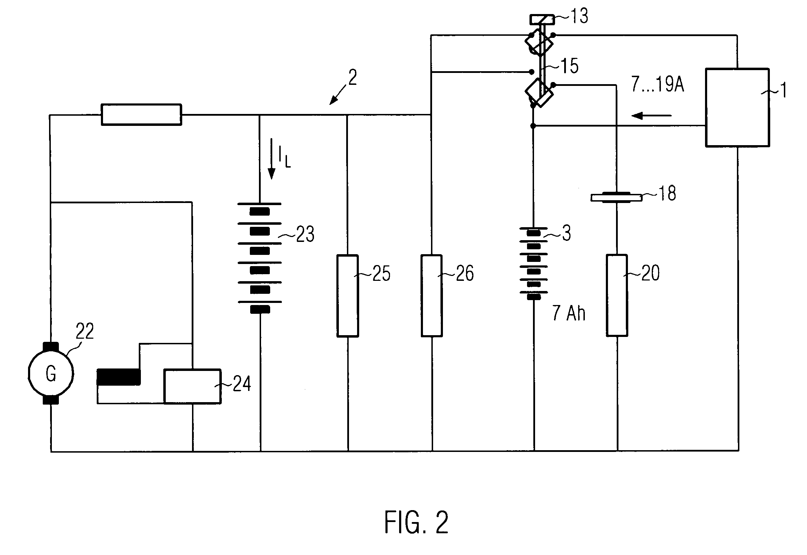

In Figur 2 ist schematisch ein möglicher Einsatz der Ladewandlereinheit 4 bei einem Fahrzeug dargestellt.

Figur 2 zeigt einen Generator 22, welcher über einen Regler 24 eingestellt wird. Der Generator 22 stellt der Starterbatterie 23 eine Versorgungsspannung zur Verfügung. Die Haupt- bzw. Starterbatterie 23 wird während eines Motorlaufs des Fahrzeugs geladen.

Die Starterbatterie 23 versorgt Großverbraucher 25 des Fahrzeugs, wie einen Anlasser, ein ABS-System, ein Gebläse und Leuchten des Fahrzeugs sowie Kleinverbraucher 26 mit Strom.

Parallel zu der Starterbatterie 23 ist die kleine leichte kostengünstige Zusatzbatterie 3 geschaltet. Die Starterbatterie 23 und die Zusatzbatterie 3 sind mit einer Zündung bzw. einem Zündschalter 13 über den Umschalter 15 gekoppelt.

Parallel zu der Zusatzbatterie 3 sind der bzw. die Ruhestromverbraucher 20, wie ein Zentralverriegelungsempfänger, ein Marderschutz, ein Bordrechner, ein Radio, eine Uhr und/oder eine Standheizung geschaltet. Vor dem jeweiligen Ruhestromverbraucher 20 ist eine Absicherungseinheit 18 vorgesehen.

Die Zusatzbatterie 3 ist mit der Vorrichtung 1 zum Laden der Zusatzbatterie 3 gekoppelt, wobei die Vorrichtung 1 auch mit der Zündung 13 gekoppelt ist.

Läuft der Motor des Fahrzeugs, wird durch den Generator bzw. die Lichtmaschine 22 Strom erzeugt, mit welchem die Starterbatterie 23 immer wieder aufgeladen werden kann. Die der Zusatzbatterie 3 vorgeschaltete Vorrichtung bzw. Ladeschaltung 1 bewirkt, dass die Zusatzbatterie 3 sehr schnell während des Motorlaufes des Fahrzeugs aufgeladen wird. Durch die Schnellladung der Zusatzbatterie 3 können gemäß der Erfindung die Vorteile einer kleinen Zusatzbatterie 3, wie ihr geringer Preis, ihr geringes Gewicht und die Möglichkeit des Einsatzes einer NiCd-Batterie genutzt werden. Durch die hohe Leistung des Generators 22 werden sowohl die Starterbatterie 23 als auch die Zusatzbatterie 3 selbst bei Kurzstreckenfahrten durch Verwendung entsprechender Laderegime voll geladen.

Während eines Stillstandes des Motors des Fahrzeugs werden die Ruhestromverbraucher 20 aus der Zusatzbatterie 3 mit Strom versorgt. Während eines Motorlaufes wird die Zusatzbatterie 3 mit hohem Ladestrom schnell nachgeladen und die Ruhestromverbraucher 20 werden aus dem lichtmaschinengestützten Bordnetz 2 mit Strom versorgt.

Die Erfindung macht es möglich, dass, obwohl eine kleine Zusatzbatterie 3 verwendet wird, der selbst für große Ruhestromverbraucher 20 erforderliche Ruhestrom aufrecht erhalten werden kann.

Die Vorrichtung 1 ermöglicht ein Batteriemanagement für die Zusatzbatterie 3, wobei während einer Fahrt des Fahrzeugs ein straffes Nachladen durch die spezielle Ladesteuerung der Ladewandlereinheit 4 für die Zusatzbatterie 3 erfolgen kann.

Durch die Schnellladung der Zusatzbatterie 3 kann der Effekt der Aussulfatierung der Batterie weitgehend vermieden werden.

Die Zusatzbatterie 3 weist im Vergleich zu der Starterbatterie 23 etwa nur ein Drittel bis etwa ein Viertel des Gewichtes der Starterbatterie 23 auf. Während die Starterbatterie 23 eine Kapazität von etwa 35 bis etwa 50 Ah besitzt, hat die kleine Zusatzbatterie 3 eine Kapazität von etwa 7 bis etwa 10 Ah.

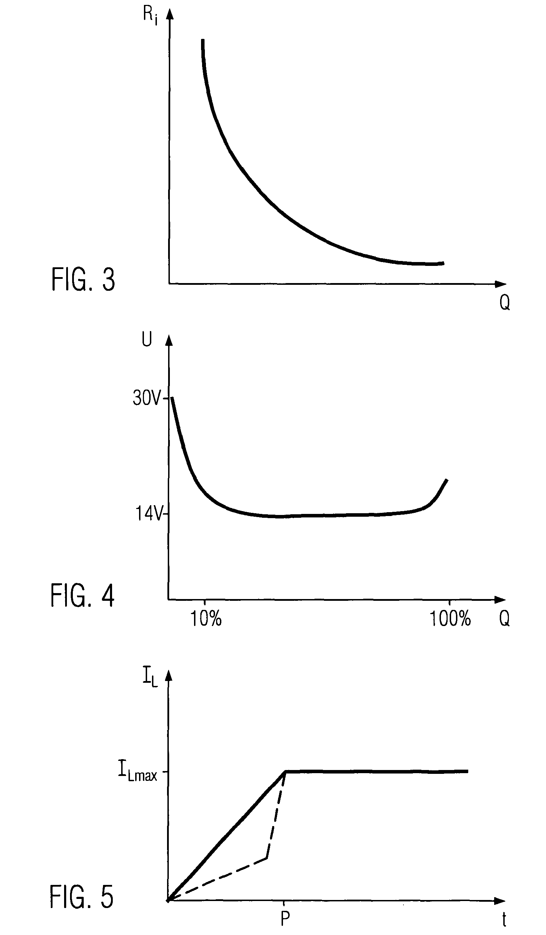

Figur 3 zeigt schematisch die Abhängigkeit eines Innenwiderstandes Rᵢ der Zusatzbatterie 3 von dem Ladezustand Q der Zusatzbatterie 3. Wie in Figur 3 deutlich zu sehen ist, steigt der Innenwiderstand Rᵢ der Zusatzbatterie 3 überraschend stark in einem Bereich der Tiefentladung der Zusatzbatterie 3 an. In diesem Bereich verliert ein in der Zusatzbatterie 3 verwendeter Elektrolyt stark an Leitfähigkeit.

Dieser Effekt ist auch in Figur 4 sichtbar, in welcher die Batteriespannung U_{Z} der Zusatzbatterie 3 über dem Ladezustand Q der Zusatzbatterie 3 dargestellt ist. Wie in Figur 4 zu sehen, steigt die Ladespannung in einem Bereich der Tiefentladung der Zusatzbatterie 3 stark an.

Um die Zusatzbatterie 3 aus dem Bereich der Tiefentladung zunächst herauszubringen, wird gemäß der vorliegenden Erfindung ein bestimmtes Laderegime zum Laden der Zusatzbatterie 3 verwendet.

Ein Beispiel für ein gemäß der vorliegenden Erfindung verwendbares Laderegime ist in Figur 5 schematisch dargestellt.

Figur 5 zeigt schematisch einen Ladestrom I_{L} für die Zusatzbatterie 3 über der Zeit. Um die Zusatzbatterie 3 zunächst aus dem Bereich der Tiefentladung herauszubringen, wird zu Beginn der Batterieaufladung ein geringer, allmählich ansteigender Ladestrom verwendet. Wie in Figur 5 angedeutet, kann der Ladestrom I_{L} linear anwachsen oder zunächst mit einer verringerten Steilheit ansteigen und später mit einer erhöhten Steilheit ansteigen. In Abhängigkeit von der verwendeten Zusatzbatterie 3 können jedoch auch andere Varianten für den Anstieg des Ladestroms I_{L} verwendet werden. Beginnend ab einem Umschaltpunkt P kann ein gleichbleibender Ladestrom I_{Lmax} verwendet werden, um die Zusatzbatterie 3 aufzuladen.

Das in Figur 5 dargestellte Laderegime bestimmt sich aus dem jeweils aktuell ermittelten Ladezustand Q der Zusatzbatterie 3 in Abhängigkeit von einer parallel dazu ermittelten Außentemperatur oder einer Batterietemperatur im Motorraum des Fahrzeugs. Das Laderegime wird durch die Signalverarbeitungs- und Steuereinheit 10 für die Stromwandlereinheit 6 bereitgestellt, welche daraufhin den Ladestrom I_{L} definiert einstellen kann.

Je nach ermitteltem Ladezustand, welcher von der Ladekontrolleinheit 5 ermittelt wird, ist der Ladestrom I_{L} entsprechend einzustellen.

Im Vergleich zum Stand der Technik hat die Vorrichtung 1 mit der Ladewandlereinheit 4 ein grundsätzlich anderes, an die speziellen Bedingungen, wie den Ruhestromverbraucher 20 oder die Außentemperatur, angepasstes Laderegime für die Zusatzbatterie 3. Daher wird die Zusatzbatterie 3 der vorliegenden Erfindung im Vergleich zu bekannten Vorrichtungen wesentlich schneller durch Verwendung der Ladewandlereinheit 4 aufgeladen.

## Patentansprüche

1. Vorrichtung (1) zum Laden einer von einem Bordnetz (2) eines Fahrzeugs gespeisten Zusatzbatterie (3) des Fahrzeugs, **dadurch gekennzeichnet, dass** die Vorrichtung (1) eine der Zusatzbatterie (3) vorgeschaltete Ladewandlereinheit (4) aufweist, welche eine Ladekontrolleinheit (5) für die Zusatzbatterie (3) und eine mit der Ladekontrolleinheit (5) zumindest mittelbar gekoppelte Stromwandlereinheit (6) für einen Eingangsstrom (7) des Bordnetzes (2) aufweist.

2. Vorrichtung nach Anspruch 1, **dadurch gekennzeichnet, dass** die Stromwandlereinheit (6) einen Abwärtswandler (8) und einen Aufwärtswandler (9) aufweist.

3. Vorrichtung nach wenigstens einem der Ansprüche 1 oder 2, **dadurch gekennzeichnet, dass** zwischen der Ladekontrolleinheit (5) und der Stromwandlereinheit (6) eine Signalverarbeitungs- und Steuereinheit (10) vorgesehen ist.

4. Vorrichtung nach Anspruch 3, **dadurch gekennzeichnet, dass** die Signalverarbeitungs- und Steuereinheit (10) mit einer Zustandsanzeige (11) gekoppelt ist.

5. Vorrichtung nach wenigstens einem der Ansprüche 3 oder 4, **dadurch gekennzeichnet, dass** die Signalverarbeitungs- und Steuereinheit (10) mit einem von einem Bediener betätigbaren Zustandsschalter (12) gekoppelt ist.

6. Vorrichtung nach wenigstens einem der vorhergehenden Ansprüche, **dadurch gekennzeichnet, dass** die Vorrichtung (1) eine mit einem Zündschalter (13) des Fahrzeugs gekoppelte Fahrzeugzustandsidentifikationseinheit (14) aufweist.

7. Vorrichtung nach Anspruch 3 und 6, **dadurch gekennzeichnet, dass** die Fahrzeugzustandsidentifikationseinheit (14) mit der Signalverarbeitungs- und Steuereinheit (10) gekoppelt ist.

8. Vorrichtung nach wenigstens einem der vorhergehenden Ansprüche, **dadurch gekennzeichnet, dass** die Vorrichtung (1) einen Umschalter (15) aufweist, mit welchem Ruhestromverbraucher des Fahrzeugs auf die Zusatzbatterie (3) oder auf das Bordnetz (2) des Fahrzeugs umschaltbar sind.

9. Vorrichtung nach wenigstens einem der vorhergehenden Ansprüche, **dadurch gekennzeichnet, dass** der Stromwandlereinheit (6) eine Eingangsabsicherungseinheit (16) vorgeschaltet ist.

10. Vorrichtung nach wenigstens einem der vorhergehenden Ansprüche, **dadurch gekennzeichnet, dass** die Vorrichtung (1) eine Batterieabsicherung (17) für die Zusatzbatterie (3) aufweist.

11. Vorrichtung nach wenigstens einem der vorhergehenden Ansprüche, **dadurch gekennzeichnet, dass** die Ladewandlereinheit (4) eine Ausgangsabsicherungseinheit (18) aufweist.

12. Verfahren zum Laden einer von einem Bordnetz (2) eines Fahrzeugs gespeisten Zusatzbatterie (3) des Fahrzeugs, **dadurch gekennzeichnet, dass** ein Ladezustand der Zusatzbatterie (3) mit einer Ladekontrolleinheit (5) für die Zusatzbatterie (3) mit einer Ladekontrolleinheit (5) für die Zusatzbatterie (3) ermittelt wird und in Abhängigkeit von dem ermittelten Ladezustand ein Eingangsstrom (7) des Bordnetzes (2) mit einer Stromwandlereinheit (6) in einen definierten Ladestrom für die Zusatzbatterie (3) umgewandelt wird.

13. Verfahren nach Anspruch 12, **dadurch gekennzeichnet, dass** eine Signalerfassungs- und -speichereinheit (10) in Abhängigkeit von dem ermittelten Ladezustand der Zusatzbatterie (3) ein Laderegime für die Zusatzbatterie (3) erstellt.

14. Verfahren nach Anspruch 13, **dadurch gekennzeichnet, dass** die Zusatzbatterie (3), wenn sie stark entladen ist, zunächst mit einem geringen, allmählich ansteigenden Ladestrom gespeist wird, und die Zusatzbatterie (3) ab Erreichen eines bestimmten Ladezustandes mit einem konstanten Ladestrom gespeist wird.

15. Verfahren nach Anspruch 13 oder 14, **dadurch gekennzeichnet, dass** das Laderegime in Abhängigkeit von einer Außentemperatur oder einer Batterietemperatur erstellt wird.

16. Verfahren nach einem der Ansprüche 12 bis 15, **dadurch gekennzeichnet, dass** der Ladezustand der Zusatzbatterie (3) angezeigt wird.

17. Verfahren nach einem der Ansprüche 12 bis 16, **dadurch gekennzeichnet, dass** eine Ladestromversorgung der Zusatzbatterie (3) mit einem Zustandsschalter (12) beeinflusst wird.

18. Verfahren nach einem der Ansprüche 13 bis 15, **dadurch gekennzeichnet, dass** ein Zustand des Fahrzeugs mit einer Fahrzeitzustandsidentifikationseinheit (14) ermittelt wird und an die Signalverarbeitungs- und Steuereinheit (10) übermittelt wird.

19. Verfahren nach einem der Ansprüche 12 bis 18, **dadurch gekennzeichnet, dass** Ruhestromverbraucher des Fahrzeugs mit einem Umschalter (15) auf die Zusatzbatterie (3) oder auf das Bordnetz (2) des Fahrzeugs umgeschaltet werden.

## Geänderte Patentansprüche

### Geänderte Patentansprüche gemäss Regel 86(2) EPÜ.

**1.** Vorrichtung (1) zum Laden einer von einem Bordnetz (2) eines Fahrzeugs gespeisten Zusatzbatterie (3) des Fahrzeugs, wobei das Fahrzeug eine Starterbatterie (23) zum Starten des Motors des Fahrzeugs und die Zusatzbatterie (3) zur Stromversorgung von Ruhestromverbrauchern (20) des Fahrzeugs bei einem Stillstand des Fahrzeugs aufweist, **dadurch gekennzeichnet, dass** die Vorrichtung (1) eine der Zusatzbatterie (3) vorgeschaltete Ladewandlereinheit (4) aufweist, welche eine Ladekontrolleinheit (5) für die Zusatzbatterie (3) und eine mit der Ladekontrolleinheit (5) zumindest mittelbar gekoppelte Stromwandlereinheit (6) für einen Eingangsstrom (7) des durch eine Lichtmaschine (22) mit Strom versorgten Bordnetzes (2) aufweist.

**2.** Vorrichtung nach Anspruch 1, **dadurch gekennzeichnet, dass** die Stromwandlereinheit (6) einen Abwärtswandler (8) und einen parallel zu dem Abwärtswandler (8) geschalteten Aufwärtswandler (9) für eine Umwandlung des Eingangsstroms (7) in einen Ladestrom (19) für die Zusatzbatterie (3) aufweist.

**3.** Vorrichtung nach wenigstens einem der Ansprüche 1 oder 2, **dadurch gekennzeichnet, dass** die Vorrichtung (1) eine Signalverarbeitungs- und Steuereinheit (10) aufweist, welche mit der Ladekontrolleinheit (5) und der Stromwandlereinheit (6) derart gekoppelt ist, dass von der Signalsverarbeitungs- und Steuereinheit (10) eine Information von der Ladekontrolleinheit (5) über einen Ladezustand der Zusatzbatterie (3) an die Stromwandlereinheit (6) übermittelbar ist.

**4.** Vorrichtung nach Anspruch 3, **dadurch gekennzeichnet, dass** die Signalverarbeitungs- und Steuereinheit (10) mit einer Ladezustandsanzeige (11) gekoppelt ist.

**5.** Vorrichtung nach wenigstens einem der Ansprüche 3 oder 4, **dadurch gekennzeichnet, dass** die Signalverarbeitungs- und Steuereinheit (10) mit einem von einem Bediener betätigbaren Zustandsschalter (12) zur Beeinflussung der Stromversorgung des Fahrzeugs aus der Zusatzbatterie (3) oder der Ladestromversorgung der Zusatzbatterie (3) gekoppelt ist.

**6.** Vorrichtung nach wenigstens einem der vorhergehenden Ansprüche, **dadurch gekennzeichnet, dass** die Vorrichtung (1) eine mit einem Zündschalter (13) des Fahrzeugs gekoppelte Fahrzeugzustandsidentifikationseinheit (14) zur Feststellung eines Motorlaufs des Fahrzeugs aufweist.

**7.** Vorrichtung nach Anspruch 3 und 6, **dadurch gekennzeichnet, dass** die Fahrzeugzustandsidentifikationseinheit (14) mit der Signalverarbeitungs- und Steuereinheit (10) gekoppelt ist.

**8.** Vorrichtung nach wenigstens einem der vorhergehenden Ansprüche, **dadurch gekennzeichnet, dass** die Vorrichtung (1) einen Umschalter (15) zum Umschalten der Ruhestromverbraucher des Fahrzeugs auf die Zusatzbatterie (3) oder auf das Bordnetz (2) des Fahrzeugs aufweist.

**9.** Vorrichtung nach wenigstens einem der vorhergehenden Ansprüche, **dadurch gekennzeichnet, dass** der Stromwandlereinheit (6) eine Eingangsabsicherungseinheit (16) vorgeschaltet ist.

**10.** Vorrichtung nach wenigstens einem der vorhergehenden Ansprüche, **dadurch gekennzeichnet, dass** die Vorrichtung (1) eine Batterieabsicherung (17) für die Zusatzbatterie (3) aufweist.

**11.** Vorrichtung nach wenigstens einem der vorhergehenden Ansprüche, **dadurch gekennzeichnet, dass** die Ladewandlereinheit (4) eine Ausgangsabsicherungseinheit (18) aufweist.

**12.** Verfahren zum Laden einer von einem Bordnetz (2) eines Fahrzeugs gespeisten Zusatzbatterie (3) des Fahrzeugs, wobei das Fahrzeug eine Starterbatterie (23) zum Starten des Motors des Fahrzeugs und die Zusatzbatterie (3) zur Stromversorgung von Ruhestromverbrauchern (20) des Fahrzeugs bei einem Stillstand des Fahrzeugs aufweist, **dadurch gekennzeichnet, dass** ein Ladezustand der Zusatzbatterie (3) mit einer Ladekontrolleinheit (5) für die Zusatzbatterie (3) mit einer Ladekontrolleinheit (5) für die Zusatzbatterie (3) ermittelt wird und in Abhängigkeit von dem ermittelten Ladezustand ein Eingangsstrom (7) des durch eine Lichtmaschine (22) mit Strom versorgten Bordnetzes (2) mit einer Stromwandlereinheit (6) in einen definierten Ladestrom für die Zusatzbatterie (3) umgewandelt wird.

**13.** Verfahren nach Anspruch 12, **dadurch gekennzeichnet, dass** eine Signalerfassungs- und -speichereinheit (10) in Abhängigkeit von dem ermittelten Ladezustand der Zusatzbatterie (3) ein Laderegime für die Zusatzbatterie (3) erstellt.

**14.** Verfahren nach Anspruch 13, **dadurch gekennzeichnet, dass** die Zusatzbatterie (3), wenn sie stark entladen ist, zunächst mit einem geringen, allmählich ansteigenden Ladestrom gespeist wird, und die Zusatzbatterie (3) ab Erreichen eines bestimmten Ladezustandes mit einem konstanten Ladestrom gespeist wird.

**15.** Verfahren nach Anspruch 13 oder 14, **dadurch gekennzeichnet, dass** das Laderegime in Abhängigkeit von einer Außentemperatur oder einer Batterietemperatur erstellt wird.

**16.** Verfahren nach einem der Ansprüche 12 bis 15, **dadurch gekennzeichnet, dass** der Ladezustand der Zusatzbatterie (3) angezeigt wird.

**17.** Verfahren nach einem der Ansprüche 12 bis 16, **dadurch gekennzeichnet, dass** die Stromversorgung des Fahrzeugs aus der Zusatzbatterie (3) oder eine Ladestromversorgung der Zusatzbatterie (3) mit einem Zustandsschalter (12) beeinflusst wird.

**18.** Verfahren nach einem der Ansprüche 13 bis 15, **dadurch gekennzeichnet, dass** ein Zustand des Fahrzeugs mit einer Fahrzeitzustandsidentifikationseinheit (14) ermittelt wird und an die Signalverarbeitungs- und Steuereinheit (10) übermittelt wird.

**19.** Verfahren nach einem der Ansprüche 12 bis 18, **dadurch gekennzeichnet, dass** die Ruhestromverbraucher des Fahrzeugs mit einem Umschalter (15) auf die Zusatzbatterie (3) oder auf das Bordnetz (2) des Fahrzeugs umgeschaltet werden.
